(19) Europäisches Patentamt
European Patent Office
Office européen des brevets

(11) EP 3 075 704 B1

## (12) EUROPÄISCHE PATENTSCHRIFT

(45) Veröffentlichungstag und Bekanntmachung des Hinweises auf die Patenterteilung:
11.10.2017 Patentblatt 2017/41

(51) Int Cl.:
*C01B 3/38* (2006.01)   *B01J 8/06* (2006.01)

(21) Anmeldenummer: 16000387.7

(22) Anmeldetag: 16.02.2016

(54) **OFEN MIT ELEKTRISCH SOWIE MITTELS BRENNSTOFF BEHEIZBAREN REAKTORROHREN ZUR DAMPFREFORMIERUNG EINES KOHLENWASSERSTOFFHALTIGEN EINSATZES**

FURNACE WITH ELECTRICALLY HEATABLE AND FUEL HEATABLE REACTOR TUBES FOR HYDROCARBON STEAM REFORMING

FOUR POUR LE REFORMAGE A LA VAPEUR D'HYDROCARBURES DOTE DE TUBES CHAUFFABLES PAR COMBUSTION ET ELECTRIQUEMENT

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 31.03.2015 DE 102015004121

(43) Veröffentlichungstag der Anmeldung:
05.10.2016 Patentblatt 2016/40

(73) Patentinhaber: Linde Aktiengesellschaft
80331 München (DE)

(72) Erfinder:
• Ranke, Harald
82343 Pöcking (DE)
• Seliger, Andreas
80796 München (DE)
• Stiller, Christoph
82256 Fürstenfeldbruck (DE)
• Hübner, Stefan
81675 München (DE)
• Mabrouk, Rachid
81477 München (DE)

(74) Vertreter: Fischer, Werner
Linde AG
Technology & Innovation
Corporate Intellectual Property
Dr.-Carl-von-Linde-Straße 6-14
82049 Pullach (DE)

(56) Entgegenhaltungen:
WO-A1-80/01065    US-A- 3 453 087
US-A- 3 479 143

**Beschreibung**

Die Erfindung betrifft einen Ofen, z.B. zur Durchführung einer Dampfreformierung eines kohlenwasserstoffhaltigen Einsatzgasstromes, sowie ein entsprechendes Verfahren.

Die Dampfreformierung, insbesondere von Methan, ist eine weit verbreitete und etablierte Technologie zur Herstellung von Synthesegas. Auch aktuell wird die Dampfreformierung insbesondere zur Herstellung von Wasserstoff anderen Verfahren vorgezogen.

Bei der Dampfreformierung handelt es sich um eine allotherme Reaktion, die z.B. im Falle von Erdgas bzw. Methan als Einsatz gemäß der folgenden Reaktionsgleichung in Gegenwart eines geeigneten Katalysators abläuft:

$$CH_4 + H_2O \dashrightarrow CO + 3\,H_2.$$

Zur Durchführung wird vorzugsweise heißer Wasserdampf mit dem zu reformierenden Einsatz (zum Beispiel Erdgas bzw. Methan) vermischt und unter ständiger Energiezufuhr, die durch Verbrennen eines Brennstoffes bereitgestellt wird, in Gegenwart des Katalysators in der Gasphase zu Synthesegas bzw. Wasserstoff umgesetzt.

Gegenwärtig steigt jedoch die Nachfrage nach "grünem", d.h. umweltfreundlich produziertem Synthesegas und Wasserstoff. Derzeit steht als Verfahren zur Erzeugung von grünem Wasserstoff aus erneuerbarer Elektrizität lediglich die Elektrolyse zur Verfügung, die allerdings aufgrund der vergleichsweise hohen Kosten nachteilig ist.

Hiervon ausgehend liegt der Erfindung die Aufgabe zugrunde, eine Einrichtung bzw. ein Verfahren zur Erzeugung von Synthesegas, insbesondere Wasserstoff, zur Verfügung zu stellen, die bzw. das im Hinblick auf die vorgenannte Problematik verbessert ist.

Diese Aufgabe wird durch einen Ofen mit den Merkmalen des Anspruchs 1 gelöst. Vorteilhafte Ausgestaltungen der Erfindung sind in den zugehörigen Unteransprüchen angegeben und werden nachfolgend beschrieben. Gemäß Anspruch 1 ist danach erfindungsgemäß ein Ofen zur Dampfreformierung eines kohlenwasserstoffhaltigen, vorzugsweise Methan umfassenden Einsatzes vorgesehen, wobei der Ofen aufweist:

- eine Brennkammer,
- eine Mehrzahl an in der Brennkammer angeordneten Reaktorrohren zur Aufnahme eines Katalysators sowie zum Durchführen des Einsatzes durch die Reaktorrohre,
- zumindest einen Brenner, der dazu ausgebildet ist, zum Beheizen der Reaktorrohre einen Brennstoff in der Brennkammer zu verbrennen, wobei der Ofen zusätzlich zu dem mindestens einen Brenner zumindest eine Spannungsquelle aufweist, die mit der Mehrzahl an Reaktorrohren derart verbunden ist, dass in den Reaktorrohren jeweils ein elektrischer Strom erzeugbar ist, der die Reaktorrohre zum Heizen des Einsatzes erwärmt.

Das technische Merkmal, wonach die Reaktorrohre in der Brennkammer angeordnet sind, ist so zu verstehen, dass sich die Reaktorrohre zumindest abschnittsweise in der Brennkammer erstrecken, so dass dort erzeugte Wärme auf die Reaktorrohre übertragbar ist.

Die Erfindung nutzt also zur Synthesegas- bzw. Wasserstoffherstellung die etablierte Technologie der Dampfreformierung, wobei aufgrund der erfindungsgemäßen technischen Lehre die vorteilhafte Möglichkeit besteht, z.B. bei Vorhandensein von überschüssiger elektrischer Energie bzw. erneuerbarer elektrischer Energie, zumindest einen Teil des Brennstoffs einzusparen und die Erwärmung des Einsatzstromes durch ein elektrisches Direktheizen der Reaktorrohre zu unterstützen bzw. temporär zu ersetzen.

Gemäß einer bevorzugten Ausführungsform des erfindungsgemäßen Ofens weist der Ofen M Außenleiter L1,...,LM auf, wobei die mindestens eine Spannungsquelle dazu ausgebildet ist, an den M Außenleitern L1,...,LM je eine Wechselspannung bereitzustellen, wobei M eine natürliche Zahl größer oder gleich zwei ist, und wobei jene Wechselspannungen gegeneinander um $2\pi/M$ phasenverschoben sind.

Weiterhin ist gemäß einer bevorzugten Ausführungsform des erfindungsgemäßen Ofens vorgesehen, dass die Reaktorrohre in einen Sammler münden, über den ein Rohprodukt- bzw. Rohsynthesegasstrom einer in den Reaktorrohren in Gegenwart eines geeigneten Katalysators stattfindenden Dampfreformierung aus den Reaktorrohren abziehbar ist.

Vorzugsweise sind die Reaktorrohre parallel zueinander angeordnet und erstrecken sich jeweils entlang einer Längs- bzw. Zylinderachse, die parallel zur Vertikalen verläuft. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die Reaktorrohre und/oder der Sammler können zumindest abschnittsweise hohlzylindrisch, bevorzugt hohlkreiszylindrisch, ausgebildet sein. Andere Querschnittsformen sind auch denkbar. Weiterhin bestehen die Reaktorrohre sowie der Sammler aus einem elektrisch leitfähigen Material bzw. weisen zumindest ein solches Material auf, so dass das Heizen der Reaktorrohre durch Erzeugung eines elektrischen Stromes bzw. Joulscher Wärme in den Reaktorrohren möglich ist.

Gemäß einer bevorzugten Ausführungsform des erfindungsgemäßen Ofens ist vorgesehen, dass die Außenleiter L1,...,LM jeweils mit einem zugeordneten Reaktorrohr verbunden sind. Dies ist so zu verstehen, dass jeder Außenleiter mit einem eigenen Reaktorrohr elektrisch leitend verbunden ist, so dass die Außenleiter auf eine entsprechende Anzahl von Reaktorrohren verteilt sind. Die Außenleiter sind dabei bevorzugt so mit den M Reaktorrohren verbunden, dass eine Sternschaltung gebildet wird, bei der der Sternpunkt zweckmäßigerweise durch den Sammler gebildet wird bzw. der Sammler den Sternpunkt aufweist. Hierbei kann der Sternpunkt geerdet sein.

Unter einer Sternschaltung wird vorliegend, wie allgemein üblich, eine Zusammenschaltung von beliebig vielen Anschlüssen (M Anschlüsse, wobei ein ggf. vorhandener Neutralleiter auch mit dem Sternpunkt verbunden sein kann) über je einen Widerstand an einen gemeinsamen Punkt verstanden, der als Sternpunkt bezeichnet wird. Der Sternpunkt führt mit Vorteil bei gleichmäßiger Belastung der M (z.B. M=3) Außenleiter keinen Strom (bei ungleichmäßiger Belastung lediglich die Differenz der Ströme bzw. bei hochohmiger Anbindung des Neutralleiters mit dem Sternpunkt der mindestens einen Rohrleitung eine Differenzspannung).

Bevorzugt sind daher die besagten Reaktorrohre so konfiguriert, d.h. so gleich geschaffen, dass sich die Ströme im Sternpunkt, d.h. am Sammler, aufheben. Mit anderen Worten weisen also bevorzugt die hergestellten, elektrisch leitendenden Verbindungen (die jeweils zumindest einen Teil des betreffenden Reaktorrohres umfassen) zwischen dem jeweiligen Außenleiter der mindestens einen Spannungsquelle und dem Sternpunkt bzw. Sammler den gleichen Ohmschen Widerstand auf, so dass sich im Sternpunkt bzw. am Sammler die einzelnen Ströme aufheben und der Sammler stromfrei bleibt.

Ein Vorteil der erfindungsgemäßen technischen Lehre besteht darin, dass ein herkömmlicher Dampfreformer bzw. Ofen mit der erfindungsgemäßen Stromheizung nachgerüstet werden kann. Die bei der Heizung der Reaktorrohre auftretenden Ströme können im Bereich von 6000 bis 8000 Ampere liegen. Die an den Außenleitern bereitgestellten Spannungen können im Bereich von 30 Volt bis 50 Volt liegen und können z.B. durch vorgeschaltete Thyristorsteller geregelt werden.

Gemäß einer bevorzugten Ausführungsform ist M=3, d.h., die mindestens eine Spannungsquelle ist als Dreiphasenwechselspannungsquelle ausgebildet, so dass der in der in dem jeweiligen Reaktorrohr erzeugte Strom zum direkten Joulschen Heizen des jeweiligen Reaktorrohrs ein Dreiphasenwechselstrom ist, der oftmals auch als Drehstrom bezeichnet wird.

Es handelt sich dabei um einen Mehrphasenwechselstrom, der bekanntermaßen aus drei einzelnen Wechselströmen oder Wechselspannungen gleicher Frequenz besteht:

$$U_{L1}=U_0\cos(\omega t),$$

$$U_{L2}=U_0\cos(\omega t-120°),$$

$$U_{L3}=U_0\cos(\omega t-240°),$$

welche zueinander in ihren Phasenwinkeln fest um 120°, d.h., $2\pi/3$, verschoben sind.

Die Wechselspannungen erreichen ihre maximale Auslenkung zeitlich um je eine Drittelperiode versetzt nacheinander. Die zeitliche Verschiebung dieser so genannten Außenleiterspannungen zueinander wird durch einen Phasenverschiebungswinkel beschrieben. Die drei Leiter werden als Außenleiter bezeichnet und üblicherweise mit L1, L2 und L3 abgekürzt. Ein etwaig vorhandener Neutralleiter wird mit N bezeichnet.

Vorliegend wird die Erfindung jeweils anhand von M Reaktorrohren bzw. drei Reaktorrohren beschrieben. Natürlich können auch wesentlich mehr Reaktorrohre mit der vorliegenden technischen Lehre beheizt werden, wobei es sich idealerweise bei einer solchen Anzahl von Reaktorrohren um ein Vielfaches von M bzw. drei handelt.

Es sind dann jeweils M (z.B. drei) Außenleiter einer Spannungsquelle mit M (z.B. drei) zugeordneten Reaktorrohren elektrisch leitend in der oben beschriebenen Weise verbunden. Jeweils M Reaktorrohre können mittels einer eigenen, zugeordneten Spannungsquelle (z.B. Transformator) versorgt werden (es können also mehrere Spannungsquellen verwendet werden). Am Sammler neutralisieren sich dann bevorzugt wiederum alle Ströme, so dass der Sammler stromfrei bleibt (sogenannter Sternpunkt).

Als Spannungsquelle im Sinne der vorliegenden Erfindung wird auch ein Übergabepunkt verstanden, an dem die M Phasen bereitgestellt werden. Die benötigten Spannungen können ggf. auch außerhalb der Anlagengrenze erzeugt werden und zum Ofen bzw. zur Anlage transportiert werden. Vorzugsweise werden die Spannungen lokal mittels Transformatoren bereitgestellt, wobei jeweils für drei Reaktorrohre (Drehstrom mit M=3) ein Trafo vorhanden ist (oder für M Reaktorrohre bei M Phasen).

Gemäß einer bevorzugten Ausführungsform des erfindungsgemäßen Ofens ist vorgesehen, dass jeder Außenleiter einen Endbereich aufweist, über den er mit einem Kontaktbereich des zugeordneten Reaktorrohres elektrisch leitend verbunden ist.

Die Außenleiter bzw. Zuleitungen können natürlich durch alle erdenklichen, geeigneten elektrischen Leitungsverbindungen realisiert werden. Gemäß einer bevorzugten Ausführungsform des erfindungsgemäßen Ofens ist diesbezüglich vorgesehen, dass jeder Außenleiter zumindest abschnittweise einen ersten und einen dazu parallel geschalteten zweiten elektrischen Leiter aufweist, wobei die beiden elektrischen Leiter jeweils einen Endbereich aufweisen, der mit einem Kontaktbereich des jeweils zugeordneten Reaktorrohres elektrisch leitend verbunden ist.

Gemäß einer Ausführungsform des erfindungsgemäßen Ofens ist dabei bevorzugt vorgesehen, dass der jeweilige Endbereich z.B. über eine Pressverbindung, Schweißverbindung oder eine sonstige geeignete Verbindung mit dem Kontaktbereich des zugeordneten Reaktorrohres verbunden ist.

Gemäß einer bevorzugten Ausführungsform des erfindungsgemäßen Ofens ist vorgesehen, dass die Kontaktbereiche der Reaktorrohre jeweils quer zur Längsachse des jeweiligen Reaktorrohres von einem Mantel des jeweiligen Reaktorrohres abragen. Hieran können jeweils die beiden Endbereiche des jeweiligen ersten und zweiten Leiters festgelegt werden.

Gemäß einer weiteren bevorzugten Ausführungsform des erfindungsgemäßen Ofens ist vorgesehen, dass die Kontaktbereiche der Reaktorrohre außerhalb der Brennkammer entlang der Vertikalen bzw. entlang der Längsachsen der Reaktorrohre oberhalb der Brennkammer verlaufen.

Gemäß einer anderen bevorzugten Ausführungsform des erfindungsgemäßen Ofens ist vorgesehen, dass die Reaktorrohre im Bereich des jeweiligen Kontaktbereichs abschnittsweise eine Querschnittsverdickung aufweisen, z.B. einen vergrößerten Außendurchmesser bei gleichbleibendem Innendurchmesser, wobei die Dicke des Rohres im Bereich der Querschnittsverdickung z.B. doppelt so groß sein kann wie außerhalb des querschnittsverdickten Rohrabschnitts. Weiterhin kann es sich bei der Querschnittsverdickung z.B. um einen umlaufenden Flansch handeln. Die jeweilige Querschnittsverdickung umfasst den jeweiligen Kontaktbereich des betreffenden Reaktorrohres und ist vorzugsweise oberhalb einer oberen bzw. der obersten Wandung der Brennkammer vorgesehen. Durch die Querschnittsverdickung wird in diesem Reaktorrohrabschnitt außerhalb des Ofens der Widerstand des Reaktorrohres herabgesetzt, so dass die in diesem Abschnitt unerwünschte Joulsche Wärme geringer ist.

Gemäß einer weiteren bevorzugten Ausführungsform des erfindungsgemäßen Ofens ist eine Kühleinrichtung vorgesehen, die dazu konfiguriert ist, die Außenleiter oder die jeweiligen ersten und die zweiten elektrischen Leiter mittels eines fluiden Kühlmittels, bei dem es sich beispielsweise um Wasser handelt, zu kühlen. Unter einem fluiden Kühlmittel wird hier ein fließfähiges, bevorzugt ein flüssiges und/oder gasförmiges Kühlmedium verstanden.

Gemäß einer weiteren bevorzugten Ausführungsform des erfindungsgemäßen Ofens ist vorgesehen, dass die Außenleiter bzw. die ersten und die zweiten Leiter je einen Strömungskanal bilden, der dazu ausgebildet ist, das fluide Kühlmittel zu führen.

Gemäß einer alternativen bevorzugten Ausführungsform des erfindungsgemäßen Ofens ist weiterhin vorgesehen, dass die Außenleiter bzw. die ersten und die zweiten Leiter je von einer vorzugsweise als elektrische Isolierung ausgebildeten Hülle umgeben sind, wobei hier die jeweilige Hülle einen Strömungskanal begrenzt, der dazu ausgebildet ist, das fluide Kühlmittel zu führen.

Gemäß einer weiteren bevorzugten Ausführungsform des erfindungsgemäßen Ofens ist vorgesehen, dass der dem jeweiligen ersten Leiter zugeordnete Strömungskanal mit dem dem jeweiligen zweiten Leiter zugeordneten Strömungskanal benachbart zum betreffenden Kontaktbereich in Strömungsverbindung steht, so dass das fluide Kühlmittel über den einen Strömungspfad zum Kontaktbereich hinführbar ist und über den anderen Strömungspfad vom Kontaktbereich wegführbar ist.

Mit anderen Worten ist also je ein erster und ein (parallel dazu geschalteter) zweiter Leiter mit einem Kontaktbereich des zugeordneten Reaktorrohres verbunden, wobei der dem ersten Leiter zugordnete Strömungskanal dazu verwendet wird, das fluide Kühlmittel zum Kontaktbereich hin zu führen, und wobei dann der dem zweiten Leiter zugeordnete Strömungskanal dazu verwendet wird, das fluide Kühlmittel wieder vom Kontaktbereich weg zu führen (die Rolle der beiden Strömungskanäle kann dabei natürlich auch vertauscht werden). Hierdurch kann ein Kühlmittelkreislauf geschaffen werden, der ein kontinuierliches Kühlen des jeweiligen Außenleiters bzw. der diesen Außenleiter darstellenden ersten und zweiten Leiter ermöglicht.

Ein weiterer Aspekt der Erfindung betrifft ein Verfahren zur Dampfreformierung gemäß Anspruch 15.

Das erfindungsgemäße Verfahren verwendet bevorzugt einen erfindungsgemäßen Ofen und kann unter Rückgriff auf die oben beschriebenen Merkmale weitergebildet werden.

Das erfindungsgemäße Verfahren sieht vor, dass ein kohlenwasserstoffhaltiger, vorzugsweise Methan umfassender, Wasserdampf aufweisender Einsatzstrom durch Reaktorrohre eines Ofens geführt wird und dort in Gegenwart eines in den Reaktorrohren angeordneten, geeigneten Katalysators zu einem Rohsynthesegasstrom aufweisend CO und $H_2$ umgesetzt wird, wobei der Einsatzstrom in den Reaktorrohren durch eine Brennkammer geführt wird, in der zum Erhitzen des Einsatzstromes ein Brennstoff verbrannt wird. Erfindungsgemäß wird dabei

- zumindest temporär der Einsatzstrom in den Reaktorrohren zusätzlich erhitzt, indem in den Reaktorrohren jeweils ein elektrischer Strom erzeugt wird, der die Reaktorrohre zum Heizen des Einsatzstromes erwärmt, oder

- zumindest temporär anstelle des Erhitzens des Einsatzstromes durch das Verbrennen des Brennstoffs in den Reaktorrohren jeweils ein elektrischer Strom erzeugt, der die Reaktorrohre zum Heizen des Einsatzstromes erwärmt.

Bevorzugt wird pro Zeiteinheit weniger Brennstoff verbraucht, wenn die Erwärmung des Einsatzstromes zusätzlich bzw. vollends durch das elektrische Direktheizen der Reaktorrohre erfolgt.

Weiterhin werden bevorzugt die Außenleiter mittels eines fluiden Kühlmittels, beispielsweise Wasser, gekühlt (siehe oben).

Hotspots an den Reaktorrohren im Bereich der Kontaktbereiche werden bevorzugt vermieden, indem eine entsprechende Querschnittsverdickung der Reaktorrohre bzw. ein entsprechender Reaktorrohrabschnitt mit geringerem Widerstand vorgesehen wird (siehe oben).

Weitere Merkmale und Vorteile der vorliegenden Erfindung sollen bei der Beschreibung von Ausführungsbeispielen anhand der Figuren erläutert werden. Es zeigen:

Fig. 1    eine ausschnitthafte, perspektivische Darstellung eines Reaktorrohres mit angeschlossenem Außenleiter, der hier durch einen ersten und einen zweiten Leiter bzw. Innenleiter zweier gekühlter Stromkabel gebildet wird, die parallel geschaltet sind und an einem Kontaktbereich des Reaktorrohres festgelegt sind, so dass eine elektrisch leitfähige Verbindung zwischen dem Außenleiter und dem Reaktorrohr hergestellt ist;

Fig. 2    eine schematische Querschnittsansicht eines erfindungsgemäßen Ofens mit Reaktorrohren nach Art der Fig. 1; und

Fig. 3    eine schematische Darstellung einer möglichen Spannungsversorgung für die Reaktorrohre eines erfindungsgemäßen Ofens.

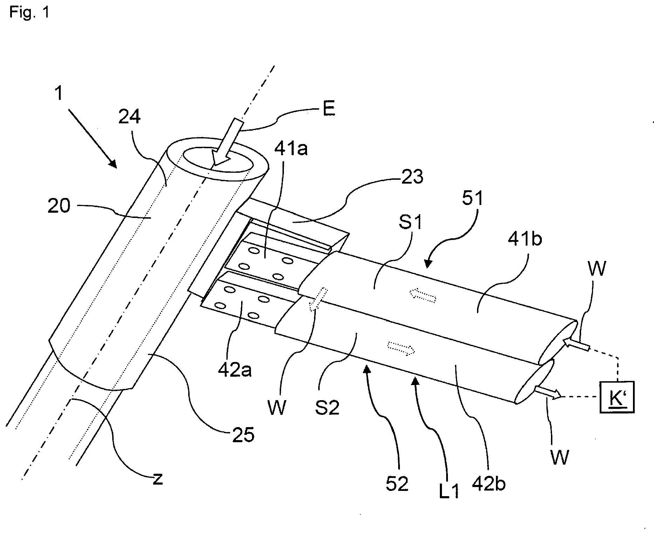

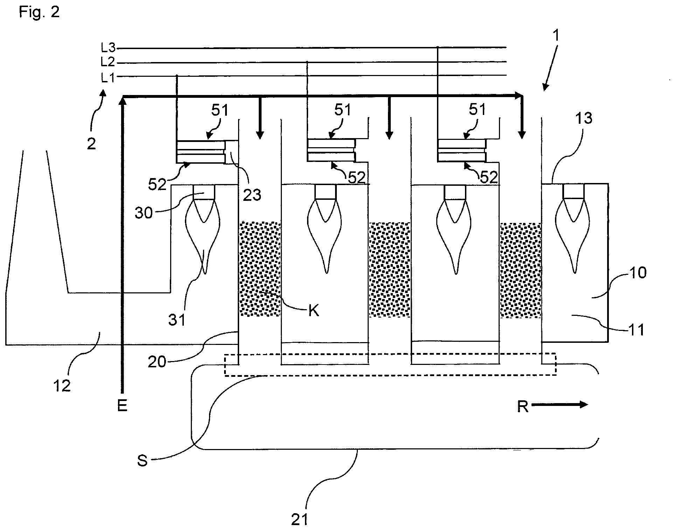

Figur 1 zeigt im Zusammenhang mit Figur 2 einen erfindungsgemäßen Ofen 1 zur Dampfreformierung eines kohlenwasserstoffhaltigen Einsatzstromes E, der vorzugsweise Methan aufweist. Der Ofen 1 weist eine Brennkammer 10 auf, die eine Strahlungszone 11 sowie eine Konvektionszone 12 aufweist. In der Strahlungszone 11 sind z.B. an einer oberen horizontalen Wandung 13 der Brennkammer 10 Brenner 30 vorgesehen, die dazu ausgebildet sind, in der Brennkammer 10 bzw. Strahlungszone 11 einen Brennstoff in Gegenwart von Sauerstoff zu verbrennen, wobei die entstehende Wärme auf eine Mehrzahl an Reaktorrohren 20 übertragen wird, von denen hier der Einfachheit halber lediglich drei gezeigt sind. Die Reaktorrohre 20 erstrecken sich jeweils entlang einer vertikalen Längsachse z durch die Strahlungszone 11 der Brennkammer 10. In den Reaktorrohren 20 ist ein Katalysator K vorgesehen. Die in der Strahlungszone 11 erzeugte Wärme ist so bemessen, dass der in die Reaktorrohre 20 eingeleitete Einsatzstrom E, der zuvor in der Konvektionszone 12 des Ofens 1 bzw. der Brennkammer 10 vorgeheizt wurde, in den Reaktorrohren 20 unter Verwendung der besagten Wärme per Dampfreformierung zu einem Rohsynthesegasstrom R umgesetzt wird, der CO und $H_2$ aufweist.

Die Reaktorrohre 20 münden dabei in einen unterhalb der Brennkammer 10 vorgesehenen Sammler 21, über den der erzeugte Rohsynthesegasstrom R aus dem Ofen 1 bzw. den Reaktorrohren 20 abgezogen werden kann.

Das reformierte Gas R verlässt die Strahlungszone 11 des Reformerofens 1 in der Regel z.B. in einem Temperaturbereich von 780°C bis 1050 °C, bevorzugt 820 °C bis 950 °C. Der Druckbereich des Gases liegt bevorzugt im Bereich von 10 bar bis 50 bar, bevorzugt 15 bis 40 bar.

Erfindungsgemäß weist der Ofen 1 nun zusätzlich zu den Brennern 30 zumindest eine Spannungsquelle 2 auf, bei der es sich vorliegend um eine Dreiphasenwechselspannungsquelle handelt. Diese ist über ihre Außenleiter L1, L2, L3 bzw. je zwei parallel geschaltete Stromkabel 51, 52 mit je einem Reaktorrohr 20 elektrisch leitend verbunden, so dass bei anliegenden Spannungen jeweils ein elektrischer Strom im entsprechenden Reaktorrohr 20 erzeugt wird, der die Reaktorrohre 20 zum Heizen des Einsatzstromes E erwärmt.

Erfindungsgemäß kann somit anstelle des Brennstoffes oder ergänzend zum Brennstoff elektrische Energie zum Heizen des Einsatzstromes E verwendet werden. Vorzugsweise handelt es sich bei der elektrischen Energie um überschüssig vorliegende Energie, beispielsweise in Form von erneuerbaren Energien (z.B. Sonnen- oder Windenergie).

Gemäß einer Ausführungsform der Erfindung wird in einem ersten Betriebsmodus des Ofens 1 ein brennbare Stoffe wie beispielsweise CO, $CH_4$, und/oder $H_2$ umfassendes Tail- oder Abgas zusammen mit Erdgas verbrannt, wobei Erdgas hier bevorzugt 10% bis 30% des gesamten, im ersten Betriebsmodus verbrannten Brennstoffs ausmacht und des Weiteren als Einsatz für die Dampfreformierung verwendet wird. Vorzugsweise stammt das Tail- oder Abgas aus einer Druckwechseladsorption, die zum Reinigen eines bei der Dampfreformierung gewonnenen Wasserstoffprodukts dient.

Der Ofen 1 kann weiterhin in einen zweiten (elektrischen) Betriebsmodus gebracht werden, in dem vorzugsweise weiterhin das Tail- bzw. Abgas als Brennstoff verfeuert wird, wobei nun anstelle der Erdgasverfeuerung die Reaktorrohre 20 zusätzlich durch die erfindungsgemäße elektrische Heizung erwärmt werden. Der Ofen 1 kann z.B. täglich zwischen 0 und 6 Stunden im zweiten Betriebsmodus gefahren werden, so dass mit Vorteil zuverlässig überschüssige, im Netz vorhandene Energie verbraucht werden kann.

Wie den Figuren 1 und 2 zu entnehmen ist, werden eine oder mehrere Spannungsquellen 2 verwendet, die eine Dreiphasenwechselspannung an drei Außenleitern L1, L2, L3 bereitstellen. Jede Phase L1, L2, L3 wird dabei einem eigenen Reaktorrohr 20 zugeordnet. Hierbei wird eine Sternschaltung gebildet, bei der der Sternpunkt S durch den Sammler 21 gebildet wird, in den die Rohrleitungen 20 einmünden (die Reaktorrohre 20 sind also elektrisch leitend mit dem Sammler 21 verbunden). Hierdurch bleibt der Sammler 21 bevorzugt mit Vorteil stromfrei. Dieses Prinzip lässt sich natürlich auf eine größere Anzahl von Reaktorrohren 20 anwenden, indem jeweils z.B. drei Reaktorrohre 20 den Phasen L1, L2, L3 einer Dreiphasenwechselspannungsquelle 2 zugeordnet werden (sind M Phasen vorhanden, werden diese auf M Reaktorrohre verteilt, siehe oben).

Gemäß Figur 1 wird bevorzugt jeder Außenleiter L1, L2, L3 (Figur 1 zeigt das exemplarisch anhand von L1) zumindest abschnittweise durch einen ersten und einen dazu parallel geschalteten zweiten elektrischen Leiter 41, 42 gebildet. Hierbei bildet der erste Leiter 41 einen Innenleiter eines ersten Stromkabels 51, während der zweite Leiter 42 einen Innenleiter eines zweiten Stromkabels 52 bildet. Die beiden elektrischen Leiter 41, 42 weisen jeweils einen Endbereich 41a, 42a auf, der mit einem Kontaktbereich 23 des jeweils zugeordneten Reaktorrohres 20 (vgl. Figur 2) elektrisch leitend verbunden ist. Der jeweilige Endbereich 41a, 42a ist hierbei bevorzugt über eine Press- oder Schweißverbindung mit dem Kontaktbereich 23 des zugeordneten Reaktorrohres 20 elektrisch leitend verbunden.

Die einzelnen Kontaktbereiche 23 der Reaktorrohre 20 stehen jeweils quer zu einer Längsachse z des jeweiligen Reaktorrohres 20 von einem Mantel 24 des jeweiligen Reaktorrohres 20 ab und können dabei einstückig an den jeweiligen Mantel 24 angeformt oder an diesen angeschweißt sein. Bevorzugt sind die Kontaktbereiche 23 außerhalb der Brennkammer 10 an den Reaktorrohren 20 vorgesehen, und zwar entlang der Vertikalen oberhalb der Brennkammer 10. Hierbei weisen die Reaktorrohre 20 bzw. deren Mäntel 24 im Bereich des jeweiligen Kontaktbereichs 23 sowie oberhalb der besagten Wandung 13 der Brennkammer 10 eine Querschnittsverdickung 25 auf, die in der Figur 1 erkennbar ist. Hierdurch sinkt im Bereich der Kontaktbereiche 23 der Reaktorrohre 20 der Widerstand der Reaktorrohre 20, so dass übermäßige Erwärmungen der Reaktorrohre 20 dort mit Vorteil unterdrückt werden können.

Vorzugsweise werden die Zuleitungen der Spannungen bzw. Ströme zu den Reaktorrohren 20, d.h. die Außenleiter L1, L2, L3 bzw. die ersten und zweiten Leiter 41, 42, im Vergleich zu den Reaktorrohren 20 mit deutlich niedrigeren Widerständen ausgeführt, um die Wärmeerzeugung in den Zuleitungen bzw. Außenleitern zu minimieren, da diese in der Regel nicht erwünscht ist.

Zum Beherrschen einer Wärmeentwicklung in den Außenleitern L1, L2, L3 bzw. in den ersten und zweiten Leitern 41, 42 (Stromkabel 51, 52) ist vorzugsweise vorgesehen, diese mit einer Kühleinrichtung K' bzw. mit einem fluiden Kühlmittel W, vorzugsweise Wasser, laufend zu kühlen. Hierbei können die ersten und die zweiten Leiter 41, 42 selbst je einen Strömungskanal S1, S2 bilden, der dazu ausgebildet ist, das fluide Kühlmittel W zu führen.

Vorzugsweise sind die ersten und die zweiten Leiter 41, 42 je von einer Hülle 41b, 42b, zweckmäßigerweise in Form einer Isolierung des jeweiligen Stromkabels 51, 52, umgeben. Anstelle der Innenleiter 41, 42 kann auch die jeweilige Hülle 41b, 42b einen Strömungskanal S1 bzw. S2 begrenzen, der dazu ausgebildet ist, das fluide Kühlmittel W zu führen.

Besonders bevorzugt stehen die beiden Strömungskanäle S1, S2 am jeweiligen Kontaktbereich 23 bzw. in dessen Nachbarschaft in Strömungsverbindung, so dass für jeden Außenleiter L1, L2, L3 ein Kühlkreislauf bereitgestellt werden kann, in dem das Kühlmittel W zum jeweiligen Kontaktbereich 23 hin (z.B. Stromkabel 51 in Fig. 1) und wieder weg (z.B. Stromkabel 52 in Fig. 1) transportiert werden kann.

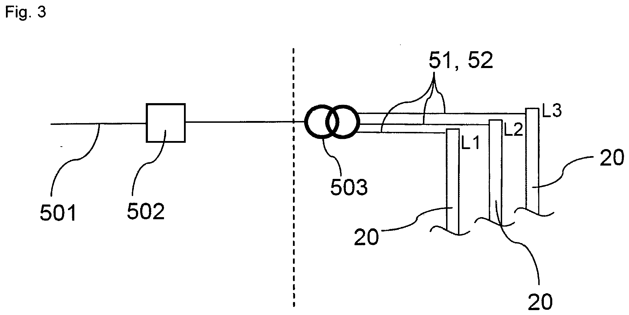

Figur 3 zeigt beispielhaft eine mögliche Spannungsversorgung eines erfindungsgemäßen Ofens, wobei die vertikale gestrichelte Linie die Trennung zwischen dem Bereich des Ofens 1 sowie z.B. einer Schaltstation darstellt. Gemäß Figur 3 ist jeweils für drei Rohre ein Transformator 503 vorhanden, der z.B. eine Primärspannung von 690V und eine Sekundärspannung von 50V für die jeweilige Phase aufweist (Leistungsaufnahme 630kVA). Die Primärspannung (z.B. 690V) wird jeweils über eine Leitung 501 sowie über einen Dreiphasenthyristorsteller 502 dem betreffenden Transformator 503 bereitgestellt, so dass die Sekundärspannung jeweils im Bereich von 30V bis 50V regelbar ist. Ausgehend vom jeweiligen Transformator 503 kann die heruntertransformierte Dreiphasenwechselspannung mittels der besagten Stromkabel 51, 52 an dem jeweiligen Reaktorrohr 20 bzw. Kontaktbereich 23 bereitgestellt werden. Die Länge der Stromkabel 51, 52 kann z.B. in einem Bereich von 10m bis 20m liegen. Andere Versorgungsspannungskonzepte sind natürlich auch denkbar.

Der erfindungsgemäße Ofen 1 eignet sich besonders zur Durchführung des erfindungsgemäßen Verfahrens. Diesbezüglich ermöglicht die technische Lehre der vorliegenden Erfindung, dass der Einsatzstrom E in den Reaktorrohren 20 z.B. temporär zusätzlich zur Feuerung erhitzt werden kann, indem in den Reaktorrohren 20 jeweils in der oben beschriebenen Weise ein elektrischer Strom erzeugt wird, der die Reaktorrohre 20 zum Heizen des Einsatzstromes E erwärmt. Weiterhin kann temporär anstelle der Feuerung jeweils ein elektrischer Strom erzeugt werden, der die Reaktorrohre 20 zum Heizen des Einsatzstromes E erwärmt. Die Erfindung ermöglicht somit in vorteilhafter Weise die Einbeziehung von überschüssig vorliegenden Energien, insbesondere erneuerbaren (elektrischen) Energien in den Prozess einer Dampfreformierung.

## Bezugszeichenliste

| | |
|---|---|
| 1 | Ofen |
| 2 | Spannungsquelle |
| 10 | Brennkammer |
| 11 | Strahlungszone |
| 12 | Konvektionszone |
| 13 | Wandung |
| 20 | Reaktorrohr |
| 21 | Sammler |
| 23 | Kontaktbereich |
| 24 | Mantel |
| 25 | Querschnittsverdickung |
| 30 | Brenner |
| 41 | Erster Leiter |
| 42 | Zweiter Leiter |
| 51 | Erstes Stromkabel |
| 52 | Zweites Stromkabel |
| 41a, 42a | Endbereich |
| 41b, 42b | Hülle bzw. Isolierung |
| 501 | Leitung |
| 502 | Thyristorsteller |
| 503 | Transformator |
| K | Katalysator |
| K' | Kühleinrichtung |
| R | Rohsynthesegasstrom |
| S1, S2 | Strömungskanal |
| W | Fluides Kühlmittel |
| Z | Längsachse |

## Patentansprüche

1. Ofen zur Dampfreformierung eines kohlenwasserstoffhaltigen, vorzugsweise Methan umfassenden Einsatzstromes (E) mit:

   - einer Brennkammer (10),
   - einer Mehrzahl an in der Brennkammer (10) angeordneten Reaktorrohren (20) zur Aufnahme eines Katalysators (K) sowie zum Durchführen des Einsatzstromes (E) durch die Reaktorrohre (20),
   - zumindest einem Brenner (30), der dazu ausgebildet ist, zum Beheizen der Reaktorrohre (20) einen Brennstoff in der Brennkammer (10) zu verbrennen,

   **dadurch gekennzeichnet,**

**dass** der Ofen zusätzlich zu dem mindestens einen Brenner (30) zumindest eine Spannungsquelle (2) aufweist, die mit der Mehrzahl an Reaktorrohren (20) derart verbunden ist, dass in den Reaktorrohren (20) jeweils ein elektrischer Strom erzeugbar ist, der die Reaktorrohre (20) zum Heizen des Einsatzes (E) erwärmt.

2. Ofen nach Anspruch 1, **dadurch gekennzeichnet, dass** der Ofen M Außenleiter aufweist, wobei die mindestens eine Spannungsquelle (2) dazu ausgebildet ist, an den M Außenleitern (L1,...,LM) je eine Wechselspannung bereitzustellen, wobei M eine natürliche Zahl größer oder gleich zwei ist, und wobei jene Wechselspannungen gegeneinander um $2\pi/M$ phasenverschoben sind.

3. Ofen nach einem der vorhergehenden Ansprüche, **dadurch gekennzeichnet, dass** die Reaktorrohre (20) in einen Sammler (21) münden.

4. Ofen nach den Ansprüchen 2 und 3, **dadurch gekennzeichnet, dass** die Außenleiter (L1,...,LM) jeweils mit einem zugeordneten Reaktorrohr (20) der Mehrzahl an Reaktorrohren (20) elektrisch leitend verbunden sind, so dass eine Sternschaltung gebildet wird, bei der der Sternpunkt (S) durch den Sammler (21) gebildet wird.

5. Ofen nach Anspruch 2 oder einem der Ansprüche 3 bis 4 soweit rückbezogen auf Anspruch 2, **dadurch gekennzeichnet, dass** jeder Außenleiter (L1,...,LM) einen Endbereich aufweist, über den er mit einem Kontaktbereich (23) des zugeordneten Reaktorrohres (20) elektrisch leitend verbunden ist.

6. Ofen nach Anspruch 2 oder einem der Ansprüche 3 bis 5 soweit rückbezogen auf Anspruch 2, **dadurch gekennzeichnet, dass** jeder Außenleiter (L1,..., LM) zumindest abschnittweise einen ersten und einen dazu parallel geschalteten zweiten elektrischen Leiter (41, 42) aufweist, wobei die beiden elektrischen Leiter (41, 42) jeweils einen Endbereich (41a, 42a) aufweisen, der mit einem Kontaktbereich (23) des zugeordneten Reaktorrohres (20) elektrisch leitend verbunden ist.

7. Ofen nach Anspruch 5 oder 6, **dadurch gekennzeichnet, dass** der jeweilige Endbereich (41a, 42a) über eine Pressverbindung oder Schweißverbindung mit dem Kontaktbereich (23) des zugeordneten Reaktorrohres (20) verbunden ist.

8. Ofen nach einem der Ansprüche 5 bis 7, **dadurch gekennzeichnet, dass** die Kontaktbereiche (23) jeweils quer zu einer Längsachse (z) des jeweiligen Reaktorrohres (20) von einem Mantel (24) des jeweiligen Reaktorrohres (20) abragen.

9. Ofen nach einem der Ansprüche 5 bis 8, **dadurch gekennzeichnet, dass** die Kontaktbereiche (23) außerhalb der Brennkammer (10) sowie oberhalb der Brennkammer (10), an den Reaktorrohren (23) vorgesehen sind.

10. Ofen nach einem der vorhergehenden Ansprüche, **dadurch gekennzeichnet, dass** die Reaktorrohre (20) am jeweiligen Kontaktbereich (23) eine Querschnittsverdickung (25) aufweisen.

11. Ofen nach einem der vorhergehenden Ansprüche, **dadurch gekennzeichnet, dass** eine Kühleinrichtung (K') vorgesehen ist, die dazu konfiguriert ist, die Außenleiter (L1,...,L2) oder die ersten und die zweiten elektrischen Leiter (41, 42) mittels eines fluiden Kühlmittels (W), zu kühlen.

12. Ofen nach Anspruch 11, **dadurch gekennzeichnet, dass** die Außenleiter (L1,...L3) oder die ersten und die zweiten Leiter (41, 42) je einen Strömungskanal bilden, der dazu ausgebildet ist, das fluide Kühlmittel (W) zu führen.

13. Ofen nach Anspruch 11, **dadurch gekennzeichnet, dass** die Außenleiter (L1,...,L3) oder die ersten und die zweiten Leiter (41, 42) je von einer Hülle (41b, 42b) in Form einer Isolierung, umgeben sind, wobei die jeweilige Hülle (41b, 42b) einen Strömungskanal (S1, S2) begrenzt, der dazu ausgebildet ist, das fluide Kühlmittel (W) zu führen.

14. Ofen nach Anspruch 6 und nach Anspruch 12 oder 13, **dadurch gekennzeichnet, dass** der dem jeweiligen ersten Leiter (41) zugeordnete Strömungskanal (S1) mit dem dem jeweiligen zweiten Leiter (42) zugeordneten Strömungskanal (S2) benachbart zum Kontaktbereich (23) in Strömungsverbindung steht, so dass das fluide Kühlmittel (W) über den einen Strömungskanal (S1, S2) zum Kontaktbereich (23) hinführbar ist und über den anderen Strömungspfad (S2, S1) vom Kontaktbereich (23) wegführbar ist.

15. Verfahren zur Dampfreformierung unter Verwendung eines Ofens (1) nach einem der vorhergehenden Ansprüche, wobei ein kohlenwasserstoffhaltiger, vorzugsweise Methan umfassender, Wasserdampf aufweisender Einsatzstrom (E) durch Reaktorrohre (20) eines Ofens (1) geführt wird und dort in Gegenwart eines in den Reaktorrohren (20) angeordneten Katalysators (K) zu einem Rohsynthesegasstrom (R) umgesetzt wird, wobei der Einsatzstrom (E) in den Reaktorrohren (20) durch eine Brennkammer (10) geführt wird, in der zum Erhitzen des Einsatzstromes (E) ein Brennstoff verbrannt wird,
**dadurch gekennzeichnet,**

- **dass** zumindest temporär der Einsatzstrom (E) in den Reaktorrohren (20) zusätzlich erhitzt wird, indem in den Reaktorrohren (20) jeweils ein elektrischer Strom erzeugt wird, der die Reaktorrohre (20) zum Heizen des Einsatzstromes (E) erwärmt, oder dass
- zumindest temporär anstelle des Erhitzens des Einsatzstromes (E) durch das Verbrennen des Brennstoffs in den Reaktorrohren (20) jeweils ein elektrischer Strom erzeugt wird, der die Reaktorrohre (20) zum Heizen des Einsatzstromes (E) erwärmt.

## Claims

1. Furnace for steam reforming a feed stream (E) containing hydrocarbon, preferably comprising methane, having:

   - a combustion chamber (10),
   - a plurality of reactor tubes (20) arranged in the combustion chamber (10) for accommodating a catalyst (K) and for passing the feed stream (E) through the reactor tubes (20),
   - at least one burner (30) which is configured to burn a combustion fuel in the combustion chamber (10) to heat the reactor tubes (20),

   **characterized in that,**
   in addition to the at least one burner (30), the furnace has at least one voltage source (2) which is connected to the plurality of reactor tubes (20) in such a manner that in each case an electric current which heats the reactor tubes (20) to heat the feedstock (E) is generable in the reactor tubes (20).

2. Furnace according to Claim 1, **characterized in that** the furnace has M outer conductors, wherein the at least one voltage source (2) is configured to provide an alternating voltage to each of the M outer conductors (L1-LM), wherein M is a natural number greater than or equal two and wherein these alternating voltages are phase-shifted relative to one another by $2\pi/M$.

3. Furnace according to one of the preceding claims, **characterized in that** the reactor tubes (20) open into a manifold (21).

4. Furnace according to Claims 2 and 3, **characterized in that** the outer conductors (L1-LM) are each electrically conductively connected to an associated reactor tube (20) of the plurality of reactor tubes (20), such that a star connection is formed, in which the neutral point (S) is formed by the manifold (21).

5. Furnace according to Claim 2 or one of Claims 3 to 4 insofar as subordinate to Claim 2, **characterized in that** each outer conductor (L1-LM) has an end region via which it is electrically conductively connected to a contact region (23) of the associated reactor tube (20).

6. Furnace according to Claim 2 or one of Claims 3 to 5 insofar as subordinate to Claim 2, **characterized in that** each outer conductor (L1,..., LM) at least in places has a first and, connected in parallel thereto, a second electrical conductor (41, 42), wherein the two electrical conductors (41, 42) in each case have an end region (41a, 42a) which is electrically conductively connected to a contact region (23) of the associated reactor tube (20).

7. Furnace according to Claim 5 or 6, **characterized in that** the respective end region (41a, 42a) is connected to the contact region (23) of the associated reactor tube (20) via a press-fit connection or welded connection.

8. Furnace according to one of Claims 5 to 7, **characterized in that** the contact regions (23) each project transversely of a longitudinal axis (z) of the respective reactor tube (20) from a jacket (24) of the respective reactor tube (20).

9. Furnace according to one of Claims 5 to 8, **characterized in that** the contact regions (23) are provided on the reactor tubes (23) outside the combustion chamber (10) and above the combustion chamber (10).

10. Furnace according to one of the preceding claims, **characterized in that** the reactor tubes (20) have a cross-sectional thickening (25) at the respective contact region (23).

11. Furnace according to one of the preceding claims, **characterized in that** a cooling device (K') is provided which is configured to cool the outer conductors (L1, ..., L2) or the first and second electrical conductors (41, 42) by means of a fluid coolant (W).

12. Furnace according to Claim 11, **characterized in that** the outer conductors (L1,...,L3) or the first and second conductors (41, 42) each form a flow duct which is configured to guide the fluid coolant (W).

13. Furnace according to Claim 11, **characterized in that** the outer conductors (L1,...,L3) or the first and second conductors (41, 42) are each surrounded by a sleeve (41b, 42b) in the form of insulation, wherein the respective sleeve (41b, 42b) defines a flow duct (S1, S2) which is configured to guide the fluid coolant (W).

14. Furnace according to Claim 6 and according to Claim 12 or 13, **characterized in that** the flow duct (S1) associated with the respective first conductor (41) is fluidically connected adjacent the contact region (23) to the flow duct (S2) associated with the respective second conductor (42), such that the fluid coolant (W) is guidable via the one flow duct (S1, S2) to the contact region (23) and via the other flow path (S2, S1) away from the contact region (23).

15. Method for steam reforming using a furnace (1) according to one of the preceding claims, wherein a feed stream (E) containing hydrocarbon, preferably comprising methane, and comprising steam is guided through reactor tubes (20) of a furnace (1) and there reacted in the presence of a catalyst (K) arranged in the reactor tubes (20) to yield a crude synthesis gas stream (R), wherein the feed stream (E) in the reactor tubes (20) is guided through a combustion chamber (10) in which a combustion fuel is combusted to heat the feed stream (E),
**characterized in that,**

- at least temporarily, the feed stream (E) in the reactor tubes (20) is additionally heated by in each case generating an electric current in the reactor tubes (20) which heats the reactor tubes (20) to heat the feed stream, or **in that**,
- at least temporarily, instead of heating the feed stream (E) by combusting the combustion fuel, in each case an electric current which heats the reactor tubes (20) to heat the feed stream (E) is generated in the reactor tubes (20).

## Revendications

1. Four de reformage à la vapeur d'un flux de charge (E) contenant un hydrocarbure, de préférence du méthane, comprenant :

- une chambre de combustion (10),
- une pluralité de tubes de réacteur (20) disposés dans la chambre de combustion (10) pour accueillir un catalyseur (K) ainsi que pour faire passer le flux de charge (E) à travers les tubes de réacteur (20),
- au moins un brûleur (30) qui est configuré pour brûler un combustible dans la chambre de combustion (10) en vue de chauffer les tubes de réacteur (20),

**caractérisé en ce que**
le four, en plus de l'au moins un brûleur (30), possède au moins une source de tension (2) qui est reliée à la pluralité de tubes de réacteur (20) de telle sorte qu'un courant électrique peut à chaque fois être généré dans les tubes de réacteur (20), lequel chauffe les tubes de réacteur (20) en vue de chauffer la charge (E).

2. Four selon la revendication 1, **caractérisé en ce que** le four possède M conducteurs extérieurs, l'au moins une source de tension (2) étant configurée pour délivrer une tension alternative aux M conducteurs extérieurs (L1, ..., LM), M étant un nombre entier naturel supérieur ou égal à deux, et les tensions alternatives respectives étant déphasées de $2\pi/M$ les unes par rapport aux autres.

3. Four selon l'une des revendications précédentes, **caractérisé en ce que** les tubes de réacteur (20) débouchent dans un collecteur (21).

4. Four selon l'une des revendications 2 et 3, **caractérisé en ce que** les conducteurs extérieurs (L1, ..., LM) sont respectivement reliés de manière électriquement conductrice avec un tube de réacteur (20) associé de la pluralité de tubes de réacteur (20), de manière à former un circuit en étoile dans lequel le point central (S) est formé par le collecteur (21).

5. Four selon la revendication 2 ou l'une des revendications 3 à 4 en référence à la revendication 2, **caractérisé en ce que** chaque conducteur extérieur (L1, ..., LM) possède une zone d'extrémité par le biais de laquelle il est relié de manière électriquement conductrice avec une zone de contact (23) du tube de réacteur (20) associé.

6. Four selon la revendication 2 ou l'une des revendications 3 à 5 dans le mesure où elle se réfère à la revendication 2, **caractérisé en ce que** chaque conducteur extérieur (L1, ..., LM) possède au moins dans certaines portions un premier conducteur électrique et un deuxième conducteur électrique (41, 42) branché en parallèle à celui-ci, les deux conducteurs électriques (41, 42) possédant respectivement une zone d'extrémité (41a, 42a) qui est reliée de manière électriquement conductrice avec une zone de contact (23) du tube de réacteur (20) associé.

7. Four selon la revendication 5 ou 6, **caractérisé en ce que** la zone d'extrémité (41a, 42a) correspondante est reliée à la zone de contact (23) du tube de réacteur (20) associé par le biais d'une liaison par pressage ou d'une liaison soudée.

8. Four selon l'une des revendications 5 à 7, **caractérisé en ce que** les zones de contact (23) font respectivement saillie d'une enveloppe (24) du tube de réacteur (20) correspondant transversalement par rapport à un axe longitudinal (z) du tube de réacteur (20) correspondant.

9. Four selon l'une des revendications 5 à 8, **caractérisé en ce que** les zones de contact (23) se trouvent en-dehors de la chambre de combustion (10) ainsi qu'au-dessus de la chambre de combustion (10), sur les tubes de réacteur (23).

10. Four selon l'une des revendications précédentes, **caractérisé en ce que** les tubes de réacteur (20) possèdent un épaississement de la section transversale (25) au niveau de la zone de contact (23) correspondante.

11. Four selon l'une des revendications précédentes, **caractérisé en ce qu'**il existe un dispositif de refroidissement (K') qui est configuré pour refroidir les conducteurs extérieurs (L1, ..., L2) ou les premier et deuxième conducteurs électriques (41, 42) au moyen d'un agent réfrigérant (W) fluide.

12. Four selon la revendication 11, **caractérisé en ce que** les conducteurs extérieurs (L1, ..., L3) ou les premier et deuxième conducteurs (41, 42) forment respectivement un canal d'écoulement qui est configuré pour conduire l'agent réfrigérant (W) fluide.

13. Four selon la revendication 11, **caractérisé en ce que** les conducteurs extérieurs (L1, ..., L3) ou les premier et deuxième conducteurs électriques (41, 42) sont respectivement entouré par une gaine (41b, 42b) sous la forme d'une isolation, les gaines (41b, 42b) correspondantes délimitant un canal d'écoulement (S1, S2) qui est configuré pour conduire l'agent réfrigérant (W) fluide.

14. Four selon la revendication 6 et selon la revendication 12 ou 13, **caractérisé en ce que** le canal d'écoulement (S1) associé au premier conducteur (41) respectif se trouve en liaison fluidique avec le canal d'écoulement (S2) associé au deuxième conducteur (42) respectif de manière adjacente à la zone de contact (23), de sorte que l'agent réfrigérant (W) fluide puisse être acheminé vers la zone de contact (23) par le biais d'un canal d'écoulement (S1, S2) et puisse. être évacué de la zone de contact (23) par le biais de l'autre chemin d'écoulement (S2, S1).

15. Procédé de reformage à la vapeur en utilisant un four (1) selon l'une des revendications précédentes, un flux de charge (E) contenant un hydrocarbure, de préférence du méthane, possédant de la vapeur d'eau étant conduit à travers les tubes de réacteur (20) d'un four (1) où, en présence d'un catalyseur (K) disposé dans les tubes de réacteur (20), il est convertit en un flux de gaz synthétique brut (R), le flux de charge (E) dans les tubes de réacteur (20) étant conduit à travers une chambre de combustion (10) dans laquelle est brûlé un combustible en vue de chauffer le flux de charge (E),
**caractérisé en ce**

- **que** le flux de charge (E) est en plus chauffé au moins temporairement dans les tubes de réacteur (20) en ce qu'un courant électrique est respectivement généré dans les tubes de réacteur (20), lequel chauffe les tubes de réacteur (20) en vue de chauffer le flux de charge (E), ou

- **qu'**au lieu du chauffage du flux de charge (E) par la combustion du combustible dans les tubes de réacteur (20), un courant électrique est respectivement généré au moins temporairement, lequel chauffe les tubes de réacteur (20) en vue de chauffer le flux de charge (E).

Fig. 1

Fig. 2

Fig. 3